# EUROPEAN PATENT APPLICATION

(11) **EP 3 761 062 A1**
(43) Date of publication of application: **06.01.2021**
(21) Application number: 20182273.1
(22) Date of filing: 25.06.2020
(51) Int. Cl.: G01S 19/11, G01S 19/03, G01S 5/00

(54) **POSITION DETERMINATION OF MOBILE OBJECTS**

(30) Priority: 02.07.2019 FI 20195600
(71) Applicant: Nokia Solutions and Networks Oy, 02610 Espoo (FI)
(72) Inventor: IHALAINEN, Tero Johannes, 37120 Nokia (FI); LI, Zexian, 2610 Espoo (FI); UUSITALO, Mikko Aleksi, 00200 Helsinki (FI); KOLMONEN, Veli-Matti, 02920 Espoo (FI); MOISIO, Martti Johannes, 01800 Klaukkala (FI)
(74) Representative: Nokia EPO representatives

(57) **Abstract**

An apparatus, method and computer program is described comprising: determining that a first mobile object requires positioning assistance based on one or more predetermined criteria, wherein the predetermined criteria includes whether one or more properties of a planned or predicted future position of the first mobile object have been identified as insufficient, or are predicted as being insufficient, for determining the position of the first mobile object with a required level of accuracy; and responsive to said determination, causing deployment of one or more movable devices (e.g. UAVs) to a target position for providing the required positioning assistance to said first mobile object.

## Description

### Field

Example embodiments relate to systems, methods and computer programs for position determination of mobile objects.

### Background

The use of Global Navigation Satellite System (GNSS) and LTE positioning techniques for determining at least the approximate positions of objects is known. However, in certain real-world scenarios, such as when an object is moving in a crowded real-world space comprising tall or densely-arranged objects, such as buildings or shipping containers, it may not be possible to obtain data for determining an accurate position. This may be due to the received signals being inaccurate due to environmental and/or multipath effects and/or due to their being without line-of-sight to GNSS satellites or LTE base stations. Taking the example of a modern or even futuristic shipping port, mobile objects such as people and vehicles may need to move around infrastructure that comprises fixed and sometimes movable objects, e.g. large cranes and shipping containers. The landscape may change quite quickly over time. There is a need to know where people and/or vehicles are, or are planning to be, in relation to such other objects in order for the shipping port to operate safely and efficiently.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

In a first aspect, this specification describes an apparatus, comprising means for: determining that a first mobile object (e.g. a harbour worker, harbour machinery or vehicle on the ground) requires positioning assistance based on one or more pre-determined criteria, wherein the pre-determined criteria includes whether one or more properties of a planned or predicted future position of the first mobile object have been identified as insufficient, or are predicted as being insufficient, for determining the position of the first mobile object with a required level of accuracy; responsive to said determination, causing deployment of one or more movable devices to a target position for providing the required positioning assistance to said first mobile object. One or more of the one or more movable devices may be unmanned aerial vehicles.

Some embodiments further comprise means for determining a required level of accuracy of the first mobile object based on its type or its current application.

The planned or predicted future position of the first mobile object may be determined based on the current position of the first mobile object and one or more prior locations of the first mobile object. Further, the planned or predicted future position of the first mobile object may be determined using a machine learning model that is trained to predict future positions based on a predetermined set of prior locations.

The planned or predicted future position of the first mobile object may be determined based on a predetermined route or waypoint plan for the mobile object.

In some embodiments, pre-provided data derived from a test journey made in advance by a movable device (e.g. an unmanned aerial vehicle) to substantially the same position may be used in the event that the planned or predicted future position has been identified as insufficient or is predicted as being insufficient.

The one or more criteria may further determine whether one or more properties of the planned or predicted future position is/are insufficient, based on estimating, over time, a level of uncertainty in that future position and identifying said planned or predicted future position as being insufficient if the uncertainty level approaches or exceeds a predetermined uncertainty threshold. The level of uncertainty may, for example, be determined using Kalman filtering. The data on level of uncertainty may be acquired (at least in part) using pre-provided data derived from a test journey made in advance by a movable device (e.g. an unmanned aerial vehicle) to substantially the same position (e.g. the same, or approximately the same, planned or predicted future position).

The one or more criteria may further comprise determining whether a planned or predicted future position of the first mobile object has a line-of-sight (LOS) to one or more remote base stations and/or satellites from which its position can be derived (and, for example, determining the position as insufficient if there is non-line of sight (NLOS)). The planned or predicted future position may be determined as having a LOS or NLOS state using pre-provided data derived from a test journey made in advance by a movable device (e.g. an unmanned aerial vehicle) to substantially the same position.

The one or more criteria may further comprise determining whether location history data of the first mobile object correspond to position estimates in high accuracy or low accuracy conditions.

Some embodiments further comprise means for accessing data representing a model of an environment in which the first mobile object is to operate, the model storing data representing a 3D terrain of the environment and, for each of a plurality of spatial points within the 3D terrain, one or more updatable values indicative of whether location assistance is required at that spatial point.

The determining means may further determine that one or more second mobile objects (e.g. a harbour worker, harbour machinery or vehicle on the ground) require positioning assistance based on one or more predetermined criteria, and responsive to said determination, determining a priority order of the first and the one or more second mobile object(s) to get assistance by causing deployment of the one or more movable devices (e.g. one or more unmanned aerial vehicles) to respective target positions according to a schedule.

The said means may comprise: at least one processor; and at least one memory including computer program code, the at least one memory and the computer program configured, with the at least one processor, to cause the performance of the apparatus.

In a second aspect, this specification describes a method, comprising: determining that a first mobile object (e.g. a harbour worker, harbour machinery or vehicle on the ground) requires positioning assistance based on one or more predetermined criteria, wherein the predetermined criteria includes whether one or more properties of a planned or predicted future position of the first mobile object have been identified as insufficient, or are predicted as being insufficient, for determining the position of the first mobile object with a required level of accuracy; responsive to said determination, causing deployment of one or more movable devices (e.g. one or more unmanned aerial vehicles) to a target position for providing the required positioning assistance to said first mobile object.

Some embodiments further comprise determining a required level of positioning accuracy of the first mobile object based on its type or its current application.

The planned or predicted future position of the first mobile object may be determined based on the current position of the first mobile object and one or more prior locations of the first mobile object. Further, the planned or predicted future position of the first mobile object may be determined using a machine learning model that is trained to predict future positions based on a predetermined set of prior locations.

The planned or predicted future position of the first mobile object may be determined based on a predetermined route or waypoint plan for the mobile object.

Some embodiments may use pre-provided data derived from a test journey made in advance by a movable device to substantially the same position in the event that the planned or predicted future position has been identified as insufficient or is predicted as being insufficient.

The one or more criteria may further determine or predict the planned or predicted future position to be insufficient based on estimating, over time, a level of uncertainty in that future position and identifying said planned or predicted future position as being insufficient if the uncertainty level approaches or exceeds a predetermined uncertainty threshold. The level of uncertainty may, for example, be determined using Kalman filtering. The data on level of uncertainty may be acquired using pre-provided data derived from a test journey made in advance by a movable device (e.g. an unmanned aerial vehicle) to substantially the same position (e.g. the same, or approximately the same, planned or predicted future position).

The one or more criteria may further comprise determining whether a planned or predicted future position of the first mobile object has a line-of-sight (LOS) to one or more remote base stations and/or satellites from which its position can be derived (and, for example, determining the position as insufficient if there is non-line-of-sight (NLOS)). The planned or predicted future position may be determined as having a LOS or NLOS state using pre-provided data derived from a test journey made in advance by a movable device (e.g. an unmanned aerial vehicle) to substantially the same position.

The method may further comprise accessing data representing a model of an environment in which the first mobile object is to operate, the model storing data representing a 3D terrain of the environment and, for each of a plurality of spatial points within the 3D terrain, one or more updatable values indicative of whether location assistance is required at that spatial point.

The method may further comprise determining that one or more second mobile objects (e.g. a harbour worker, harbour machinery or vehicle on the ground) require positioning assistance based on one or more predetermined criteria, and responsive to said determination, determining a priority order of the first and the one or more second mobile object(s) to get assistance by causing deployment of the one or more movable devices (e.g. one or more unmanned aerial vehicles) to respective target positions according to a schedule.

In a third aspect, this specification describes an apparatus, comprising at least one processor, at least one memory directly connected to the at least one processor, the at least one memory including computer program code, and the at least one processor, with the at least one memory and the computer program code being arranged to perform any method as described with reference to the second aspect.

In a fourth aspect, this specification describes an apparatus configured to perform any method as described with reference to the second aspect.

In a fifth aspect, this specification describes computer-readable instructions which, when executed by computing apparatus, cause the computing apparatus to perform any method as described with reference to the second aspect.

In a sixth aspect, this specification describes a computer readable medium comprising program instructions stored thereon for performing at least the following: determining that a first mobile object (e.g. a harbour worker, harbour machinery or vehicle on the ground) requires positioning assistance based on one or more predetermined criteria, wherein the predetermined criteria includes whether one or more properties of a planned or predicted future position of the first mobile object have been identified as insufficient, or are predicted as being insufficient, for determining the position of the first mobile object with a required level of accuracy; responsive to said determination, causing deployment of one or more movable devices (e.g. one or more unmanned aerial vehicles) to a target position for providing the required positioning assistance to said first mobile object.

In a seventh aspect, this specification describes a computer program comprising instructions for causing an apparatus to perform at least the following: determining that a first mobile object (e.g. a harbour worker, harbour machinery or vehicle on the ground) requires positioning assistance based on one or more predetermined criteria, wherein the predetermined criteria includes whether one or more properties of a planned or predicted future position of the first mobile object have been identified as insufficient, or are predicted as being insufficient, for determining the position of the first mobile object with a required level of accuracy; responsive to said determination, causing deployment of one or more movable devices (e.g. one or more unmanned aerial vehicles) to a target position for providing the required positioning assistance to said first mobile object.

In an eighth aspect, this specification describes an apparatus comprising: at least one processor; and at least one memory including computer program code which, when executed by the at least one processor, causes the apparatus to: determine that a first mobile object (e.g. a harbour worker, harbour machinery or vehicle on the ground) requires positioning assistance based on one or more predetermined criteria, wherein the predetermined criteria includes whether one or more properties of a planned or predicted future position of the first mobile object have been identified as insufficient, or are predicted as being insufficient, for determining the position of the first mobile object with a required level of accuracy; responsive to said determination, cause deployment of one or more movable devices (e.g. one or more unmanned aerial vehicles) to a target position for providing the required positioning assistance to said first mobile object.

In an ninth aspect, this specification describes an apparatus comprising: a control system configured to determine that a first mobile object (e.g. a harbour worker, harbour machinery or vehicle on the ground) requires positioning assistance based on one or more predetermined criteria, wherein the predetermined criteria includes whether one or more properties of a planned or predicted future position of the first mobile object have been identified as insufficient, or are predicted as being insufficient, for determining the position of the first mobile object with a required level of accuracy; wherein the control system in further configured, responsive to said determination, to cause deployment of one or more movable devices (e.g. one or more unmanned aerial vehicles) to a target position for providing the required positioning assistance to said first mobile object.

### Brief Description of Drawings

Example embodiments will now be described, by way of non-limiting example, with reference to the accompanying drawings, in which:
FIG. 1 shows an environment in accordance with example embodiments;
FIG. 2 shows a high-level architecture for a system according to example embodiments;
FIGS. 3 to 10 are flow charts showing algorithms in accordance with example embodiments;
FIG. 11 shows an apparatus according to an example embodiment; and
Fig. 12 shows a non-transitory media according to some embodiments.

### Detailed Description

The following abbreviations may be referred to herein:
- AoA: Angle of Arrival;
- BLER: Block Error Rate;
- BS: Base Station;
- gNB: Next Generation NodeB;
- GNSS: Global Navigation Satellite System;
- IRU: Inertial Reference Unit
- LOS: Line-Of-Sight;
- ML: Machine Learning;
- NLOS: Non-Line-Of-Sight;
- QR: Quick Response;
- NR: New Radio;
- RFID: Radio Frequency Identification;
- RTK: Real-Time Kinematic;
- SINR: Signal-to-Interference plus Noise Ratio;
- TDoA: Time Difference of Arrival;
- ToA: Time of Arrival;
- TRP: Transmission / Reception Point;
- UAV: Unmanned Aerial Vehicle;
- UE: User Equipment; and
- 5G: 5^{th} Generation.

Example embodiments relate to the tracking of mobile objects in a real-world environment. Mobile objects can be of any suitable type and may for example comprise portable devices carried by a person or mounted on a vehicle. The portable devices are presumed to have some form of sensor or sensors for determining position, e.g. receivers for receiving signals from which a geographic position can be determined or at least estimated. For example, the portable device may have one or more of a GNSS receiver, a LTE receiver, an Inertial Reference Unit (IRU) and a real-time kinematics (RTK) module. It will be appreciated that a GNSS system enables position determination based on receiving signals from a plurality of orbiting satellites. It will also be appreciated that portable devices may derive an estimate of their position via signals received at an LTE receiver from one or more base stations. Positional data can be sent over a data link to other systems that need to know the position of the mobile object. In addition, the portable device may be equipped with a system to transmit a signal which can be used to determine the position of the device on the infrastructure side.

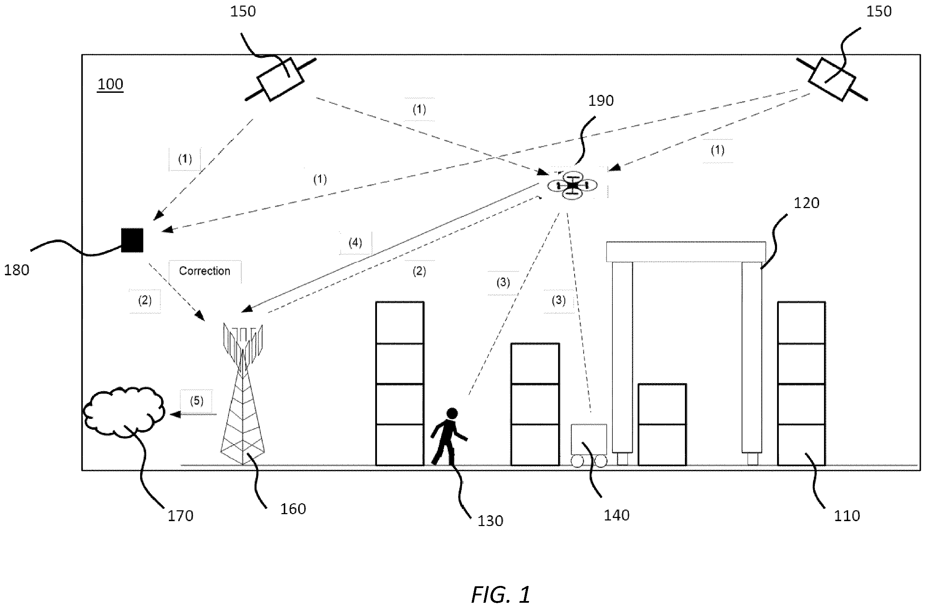

FIG. 1, by way of example, shows an environment 100 comprising some objects, including a plurality of stacked containers 110 and a crane 120. The environment 100 may represent part of a shipping port within which personnel 130 and/or vehicles 140 may regularly move. Over time, the containers 110 and crane 120 may also move in accordance with the normal operation of the shipping port (or other environment). The environment 100 therefore provides a changeable physical domain in which mobile objects or entities, such as the personnel 130 and/or vehicles 140, need to be tracked for various reasons. Such objects may be termed 'target objects' hereafter. Reasons for accurate tracking may be safety and/ or operational reasons. Target objects may experience signal blockage and/or interference to the extent that positional accuracy cannot be guaranteed. These positions may be termed "dead zones."

Typically, personnel 130 and/or vehicles 140 will carry a portable device, as mentioned above, capable of data communications and position determination using one or more sensors. The position determination may be fed back to a central reporting system. Such portable devices may comprise one or more of a mobile telephone, a smart watch, a dedicated GNSS receiver, a laptop, a digital assistant etc. Taking the example of a mobile telephone, it may comprise a communications interface, such as for one of the LTE or NR standards, e.g. 4G or 5G, and one or more sensors such as a GNSS receiver for receiving positioning signals from a plurality of GNSS satellites 150 and/or an LTE or NR receiver from which the approximate position from a plurality of LTE or NR base stations 160 may be derived. In some embodiments, differential correction may be employed to correct inaccuracies inherent in the GNSS and/or LTE positioning systems, using data from a reference receiver 180 at a fixed and precisely-known location. Other means of determining position may include an IRU and/ or RTK module.

Positional data from the personnel 130 and/ or vehicles 140 may be fed to the central reporting system via one or more base stations 160. The central reporting system may be located in the cloud 170.

Example embodiments appreciate the need to cater for such environments 100 to ensure that it is possible to localize mobile objects as they move over time with a required level of accuracy. In an environment such as that of FIG. 1, relatively high accuracy may be needed to avoid collisions and the potential for injury or long system downtimes.

Example embodiments may involve causing deployment of one or more unmanned aerial vehicles (UAVs) 190 (or some other movable device) to provide positional assistance to the one or more mobile objects in case they are within, approaching, or predicted to be within, a dead zone. Example embodiments are also concerned with when to deploy the one or more UAVs 190, as it is possible that only a limited number of UAVs may be available at a given time and there may be a need to prioritise how these are deployed according to a schedule.

Prioritising may be based on the type of mobile object and/or the application it is involved in. One or more prioritisation rules may determine a level of importance associated with different mobile objects and/or applications. For example, a member of personnel may be considered a higher priority than a vehicle. For example, a vehicle involved in a mission critical task may be considered a higher priority than a vehicle involved in a more general task.

A UAV 190 is sometimes called a drone. A UAV 190 may comprise a helicopter-like device, comprising one or more propellers, able to fly remotely or autonomously. UAVs 190 may comprise a source of power, provided usually by one or more rechargeable batteries, and may need to return to a base docking station to recharge their batteries and/or to return to a predetermined position for re-calibration or updating of software. UAVs may be issued with positional data, which may comprise a flight plan. The flight plan may define a target position, i.e. where the UAV 190 is to fly to, where it may then stay until commanded home, until a predetermined time period has lapsed, and/or until the batteries reach a certain depletion level. The flight plan may define a flight path, i.e. a general 3D path it follows to reach a destination or to follow until one of the above "return home" conditions is or are detected. UAVs 190 may determine their own position using an on-board GNSS or LTE receiver, or similar, in much the same way as mobile devices can determine their own position.

Example embodiments may make use of the fact that UAVs 190 can fly to positions well-above built-up terrain, in an environment that reduces or prevents mobile objects "on the ground" getting accurate positioning signals. UAVs 190 can therefore provide assistance data in determining a more accurate position of one or more mobile objects on the ground.

The position of each of one or more UAVs 190 can be determined with a very high accuracy due, for example, to the line-of-sight "connection" with multiple satellites. At the same time, one or more UAVs will have line-of-sight "connection" with the relevant object (e.g. personnel 130 or vehicle 140). With knowledge of both the position of a particular UAV and the estimated relative position of the UAV and the relevant object, the position of the object can be estimated with some accuracy.

In principle, in the event that there are multiple UAVs, it is possible that UAVs may act as GNSS satellites.

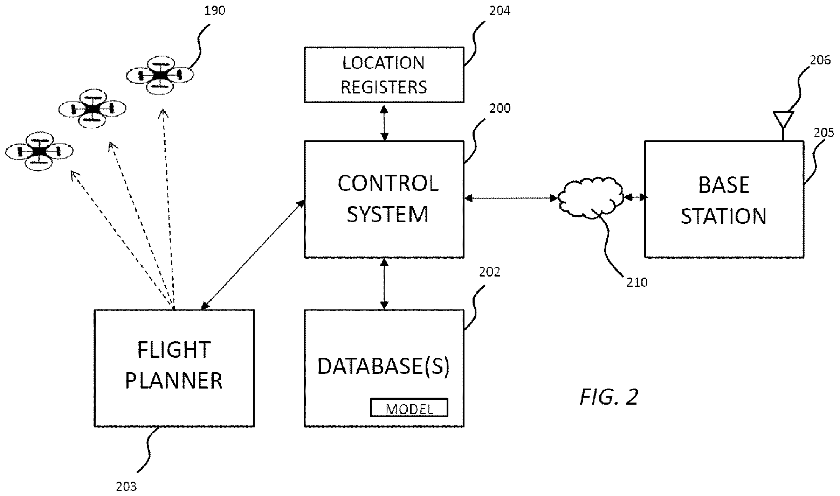

FIG. 2 shows a high-level architecture for a system according to example embodiments. It comprises a control system 200, a database 202, a flight planner 203, one or more location registers 204, and one or more base stations 205 having respective antennas 206. The system may communicate with one or more UAVs 190 for providing to the control system 200, likely via one or more of the base stations 205 (or by any other suitable means) assistance data for accurately positioning mobile devices on the ground.

The control system 200 is akin to the central reporting system mentioned above. The control system 200 may comprise one or more computing devices comprised of one or more processors or controllers and associated RAM and memory, acting as a central unit for communication with other components. Although shown directly connected to certain components in FIG. 1, the control system 200 may be in communication via wireless interfaces and/or through a network such as the Internet. For example, the control system 200 is shown connected to one or more base stations 205 via a network 210.

The database 202 may provide an up-to-date 3D model of the three-dimensional (3D) environment with respect to different characteristics or attributes. The database 202 may be of any suitable type and may, for example, provide parameters characterising, for each of a plurality of different 3D spatial points of the environment, one or more of:
- the object at said point, e.g. container; crane; object to track; free space;
- link quality at said point, e.g. positioning covariance; and
- line of sight (LOS) or non-line of sight (NLOS) state.

The database 202 effectively stores a data structure enabling the control system 200 or associated software to know what object(s) are located at a given point, and the link quality and LOS/NLOS status.

The flight planner 203 may be any computerised system for programming one or more UAVs 190 with one or more of destination coordinates and flight paths. The flight planner 203 may communicate with a particular UAV 190 via a wired link, e.g. to a docking station that the UAV returns to periodically, and/or via a wireless link directly to the UAV. The communications may be made via the control system 200.

The one or more location registers 204 may comprise one or more memories for storing an up-to-date position of one or more of the objects to be tracked, e.g. smartphones held or carried by personnel 130 or vehicles 140. The one or more location registers 204 may store historical positions of said objects to be tracked, e.g. reflecting a finite historical representation of where they have moved and are currently located. The one or more location registers 204 may also store an up-to-date position of one or more of the UAVs 190 and, similarly, a finite historical representation of where they have been and are currently located.

Such positional information may be provided from the UAVs 190 to the one or more location registers 204, via the one or more base stations 205 and the control system 200.

The one or more base stations 205 may comprise any type of base station, for example ones operating according to any LTE or NR standard (e.g. 3G/4G/5G) and may be used also in any future standard. For example, the base stations 205 may comprise eNBs or gNBs. In some embodiments, the one or more base stations 205 may also include WiFi base stations or hubs.

There may also be provided a register for each of the structural "assets" within the environment 100, for example the size, footprint and type of non-tracked objects, such as the containers 110 and/or the crane 120. The position of any moving part of the crane 120 and/or the position of given containers 110, may also be tracked and stored within, for example, the database 202, to give an up-to-date picture of said assets and where they are.

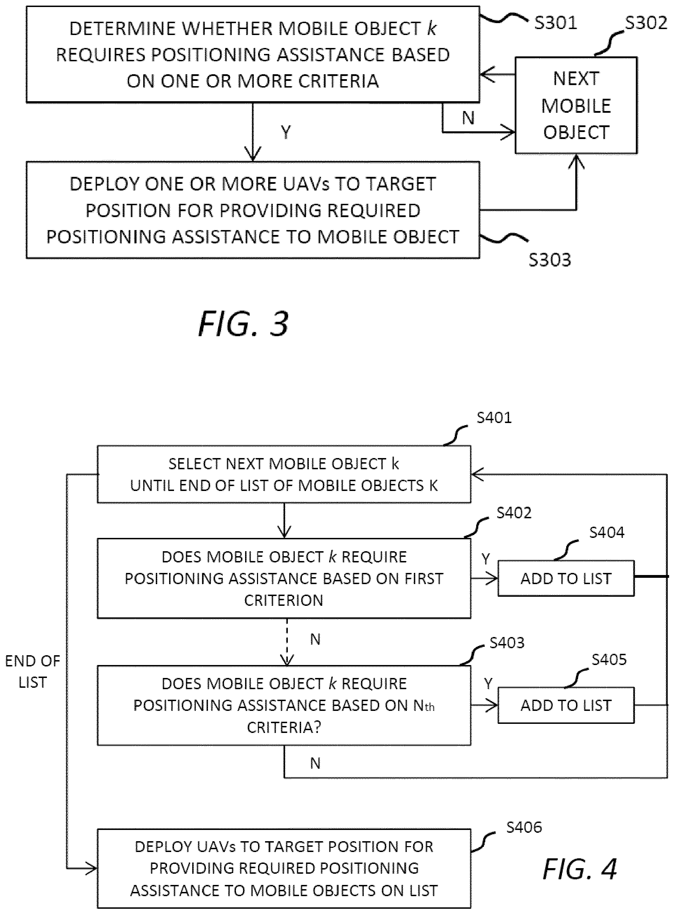

FIG. 3 is a flow graph describing a generalized process according to some example embodiments. The process may be performed in hardware, software or a combination thereof. For example, the control system 200 shown in FIG. 2 may operate according to the FIG. 3 process.

A first operation S301 may comprise determining whether a mobile object k requires positioning assistance based on one or more predetermined criteria.

If not, a second operation S302 may comprise obtaining the next mobile object *k* = *k*+*1,* if one exists, and returning to operation S301.

If in the first operation S301 it is determined that positioning assistance is required, a third operation S303 may comprise deploying, or causing deployment of, one or more UAVs to a target position for providing required positioning assistance to the mobile object.

In this embodiment, therefore, there is described a generalized method for deploying, or causing deployment, of one or more mobile objects. The one or more criteria may comprise criteria based on whether or not the target position of the mobile object *k,* is considered to be insufficient to enable determination of the object's position with a required level of accuracy (or the predicted target position is predicted to be insufficient to enable determination of the object's position with a required level of accuracy). Furthermore, the determination may relate to whether one or more properties of the target position are appropriate or predicted to be insufficient. For example, it may comprise determining if the target position is in a dead zone or is approaching a dead zone. In this case, the one or more properties may relate to the ability of the mobile object to determine its own position using external signals.

FIG. 4 is a flow chart describing a further generalized process according to some example embodiments. The process may be performed in hardware, software or a combination thereof. For example, the control system 200 shown in FIG. 2 may operate according to the FIG. 4 process. In this flow chart, it is assumed that there are two or more objects *K* and at least two predetermined criteria to determine sufficiency or insufficiency of the target position for a required positioning accuracy.

In a first operation S401, the next mobile object *k* is selected.

In a second operation S402, it is determined if the mobile object *k* requires positioning assistance based on a first criterion. If so, then in an operation S404, the mobile object *k* may be added to a list and the process may return to S401. If not, then the process may move to a third operation S403.

In the third operation S403, it may be determined if the mobile object *k* requires positioning assistance based on a further criterion. Again, if so, then in an operation S405, the mobile object *k* may be added to the above-mentioned list and the process may return to the operation S401. If not, then the process may return to the operation S401, without the mobile object *k* being added to the list.

Back at operation S401, the next mobile object *k*=*k*+*1* is selected and the process repeats until all mobile objects have been tested, i.e. *k*=*K.* The result is a list of all mobile objects that require positioning assistance, and in an operation S406, one or more UAVs may be deployed, or are caused to be deployed, to provide the required positioning assistance for each.

It should be noted that the deployment of an assisting UAV does not necessarily need to be done only after all K mobile objects have been tested. For example, once an object *k* has been added to the list of objections that require positioning assistance, the relevant UAV deployment may be started.

Note that, in some cases, one UAV 190 may be able to provide positioning assistance for a plurality of mobile objects. In some cases, more than one UAV may be required to provide positioning assistance for one or a plurality of mobile objects. In some cases, there may be a greater number of mobile objects requiring positioning assistance than there are available UAVs 190, in which case a schedule may be built in order to prioritize which UAVs to send to assist which mobile objects.

As mentioned previously, prioritization may be based on prioritization rules that may take into account the type of mobile object and/or their associated application.

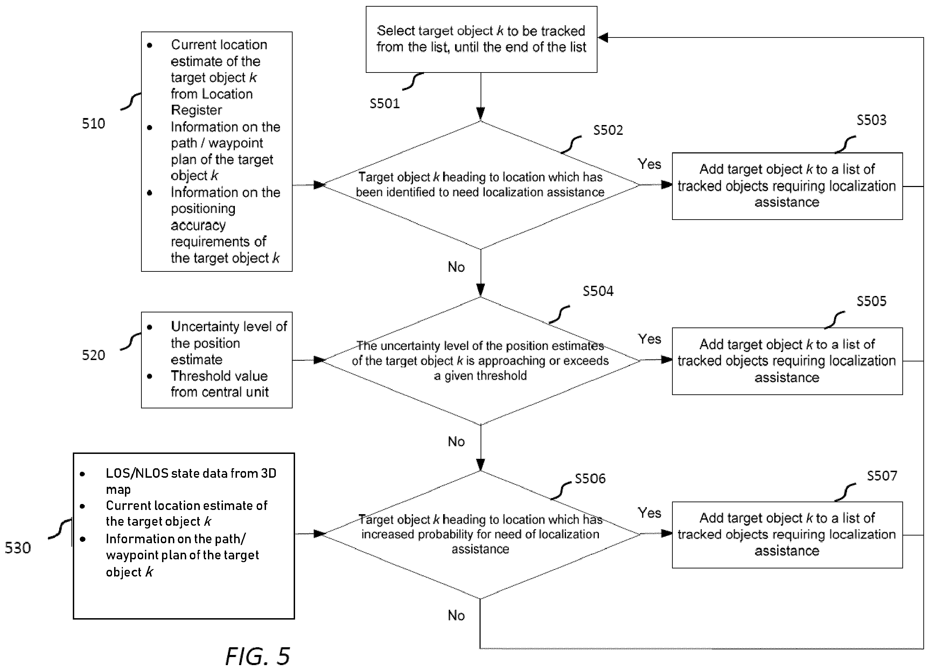

FIG. 5 is a flow chart describing a more detailed process according to some example embodiments, giving examples of different criteria to be applied and the source data that may be used in said determinations. For example, the control system 200 shown in FIG. 2 may operate according to the FIG. 5 process. The criteria shown are given merely by way of example, and different criteria may be used in any combination or sequence.

As with FIG. 4, the control system 200 performs a process that loops over a set of mobile objects that need tracking and determines if a specific object needs positioning assistance, i.e. UAV localization assistance.

In an initial operation S501, a target object *k* to be tracked is selected from the list of mobile objects to be tracked, and the operation is repeated for subsequent iterations until the end of the list is reached.

In an operation S502, it is determined if the target object *k* is heading to a location identified as needing localization assistance. This determination may be based on a set of data 510 that may include a current location estimate of the target object *k,* taken from the location registers 204, information regarding the path/waypoint plan of the target object *k,* and information on the positioning accuracy requirements of the target object *k.*

Regarding the information about the path/waypoint plan of the target object *k,* it may be that the destination of the target object is not known, but can be predicted based on any stored data, such as based on the trajectory taken over a finite time period (e.g. over the past five minutes), on the trajectory taken at the same time in a previous day, or using a prediction from a machine learning (ML) model that is trained to predict future positions based on a predetermined set of prior locations.

If localization assistance is needed, the process moves to operation S503 in which the target object *k* is added to a list of objects requiring localization assistance.

If not, the process moves to operation S504 in which another criterion is used. In this example, it is determined if the uncertainty level of position estimates associated with the target object *k* approach or exceed a given threshold. This determination may be based on a set of data 520 that may include a current uncertainty level of the position estimate and a threshold value. This criterion may therefore reflect the current, or real-time state of the target object *k,* whereby decreased localization accuracy has been detected. Uncertainty levels may be determined using mathematical algorithms, such as by Kalman filtering, which can provide estimates of target object locations and the level of uncertainty in them. The threshold may be dynamically adjusted based on the type of target object and/or the application involved.

If localization assistance is needed, the process moves to operation S505 in which the target object *k* is added to a list of objects requiring localization assistance.

If not, the process moves to operation S506 in which another criterion is used. In this example, it is determined if the target object *k* is heading to a location which has an increased probability for requiring localization assistance. This determination may be based on a set of data 530 that may include the LOS / NLOS state from the 3D model in the database 202. The set of data 530 may, for example include a current location of the target object *k* (taken from the location registers 204) and information regarding the path/waypoint plan of the target object *k.*

If localization assistance is needed, the process moves to operation S507 in which the target object *k* is added to a list of objects requiring localization assistance.

The process returns then to the initial step S501 where the next target object *k*=*k*+*1* is considered until the end of the list is reached. The resulting list of mobile objects that require localization assistance can then be allocated a required number of UAVs for deployment, and/or scheduling of available UAVs based on prioritization rules.

Regarding required positioning accuracy, this may be device or application dependent. For example, if the mobile object *k* is a person involved in a mission-critical task, such as stacking containers, then an increased positioning accuracy may be set and hence the criteria may be more stringent compared with, for example, performing a security patrol.

Regarding how to determine various parameters such as the link quality and LOS / NLOS state for the various spatial points in the environment 100, for storage in the 3D model of the database 202, one or more reconnaissance or test flights may be performed by one or more UAVs 190 under the control of the control system 200.

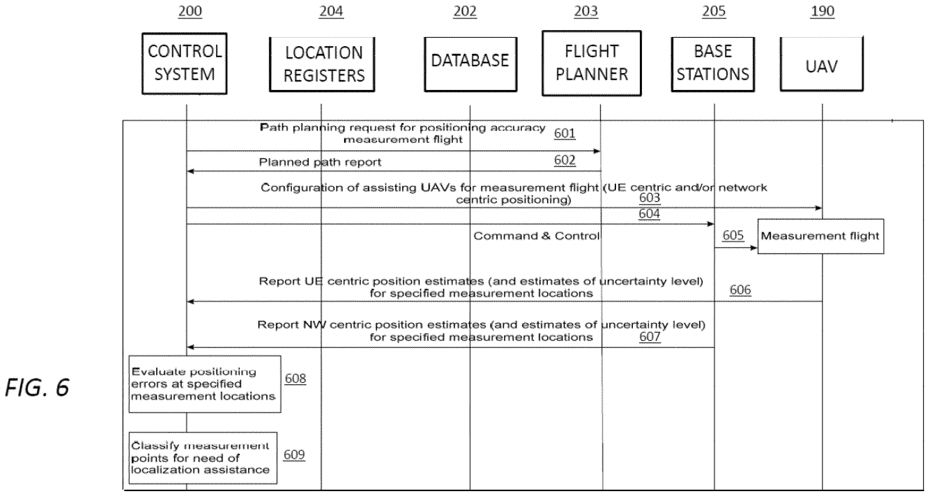

FIG. 6 is a flow chart describing signaling between, and processes at, different entities shown in FIG. 2, according to some example embodiments relating to reconnaissance or test flights. The control system 200 may configure one or more UAVs 190 in accordance with the procedure below.

The control system 200 may issue to the flight planner 203 a path planning request for a positioning accuracy measurement flight 601. In this respect, the control system 200 may determine one or more areas where localization accuracy measurements are required, e.g. based on (i) a current lack of positioning accuracy information for these areas, (ii) outdated information, or (iii) that there have been significant changes in the environment in these areas.

The flight planner 203 may respond with one or more planned path reports 602 to the control system 200, providing information on the planned routes of one or more UAVs 190.

The control system 200 may then issue configuration data 603 to one or more UAVs 190 for one or more measurement flights based on the one or more planned path reports.

A command and control signal 604 may be sent also to one or more base stations 205 for orchestrating reconnaissance UAV flights, which are handled by signals 605.

In the case of network-centric cellular based localization, the process may include, for example:
UAVs 190 transmitting uplink Sounding Reference Signals (SRS) or Positioning Reference Signals (PRS);
base stations 205 performing ToA/TDoA/AoA -based position estimation based on signals transmitted by UAVs.

In the case of UE-centric cellular based localization, the process may include, for example:
base stations 205 transmitting Synchronization Signal Block (SSB) or Positioning Reference Signals (PRS);
UAVs 190 performing ToA/TDoA/AoA-based position estimation based on signals transmitted by the base stations.

In the case of satellite-based localization (such as using GNSS or RTK-GNSS), the process may include, for example:
UAVs 190 estimating their position utilizing an on-board GNSS receiver.

Different combinations of above localization methods may be used to determine the position estimates at different measurement points.

In signals 606, the assisting UAVs 190 may report UE-centric position estimates (typically including data on the level of uncertainty) to the control system 200. The signals 606 between UAVs 190 and the control system 200 could, for example, be represented alternatively to comprise two steps: i) signaling from the UAVs 190 to base stations 205 followed by ii) signaling from base stations 205 to the control system 200.

In signals 607, the base stations 205 may report network-centric position estimates (typically including data on the level of uncertainty) to the control system 200.

In the situation that multiple positioning techniques have been used, the control system 200 may apply data fusion to derive final position estimates.

At process 608, the control system 200 may evaluate the level of errors at the location estimates with respect to pre-defined and known measurement positions.

At process 609, the control system 200 may classify the different measurement positions, utilizing information on the required localization accuracy, to positions that do not meet the accuracy requirement. These positions may consequently be associated with the label "needs localization assistance" or similar, and positions that fulfil the accuracy requirement may be labelled "localization assistance is not needed" or similar.

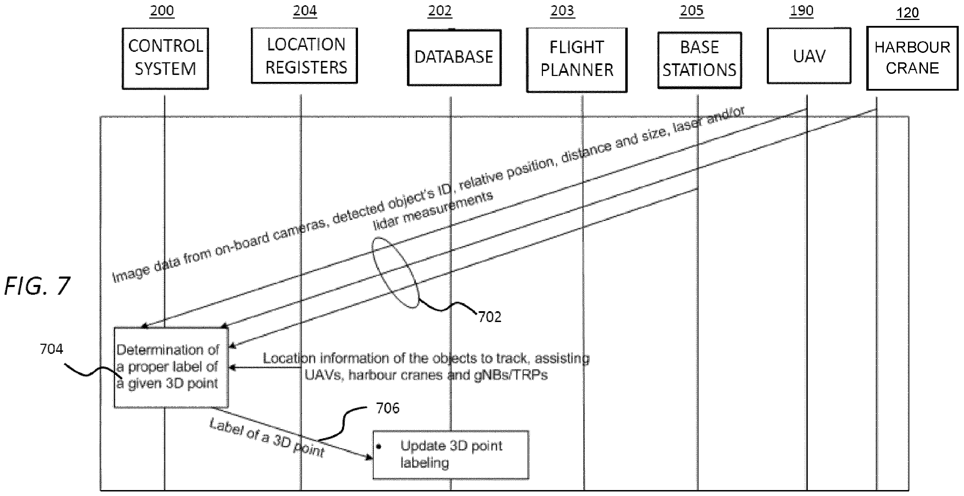

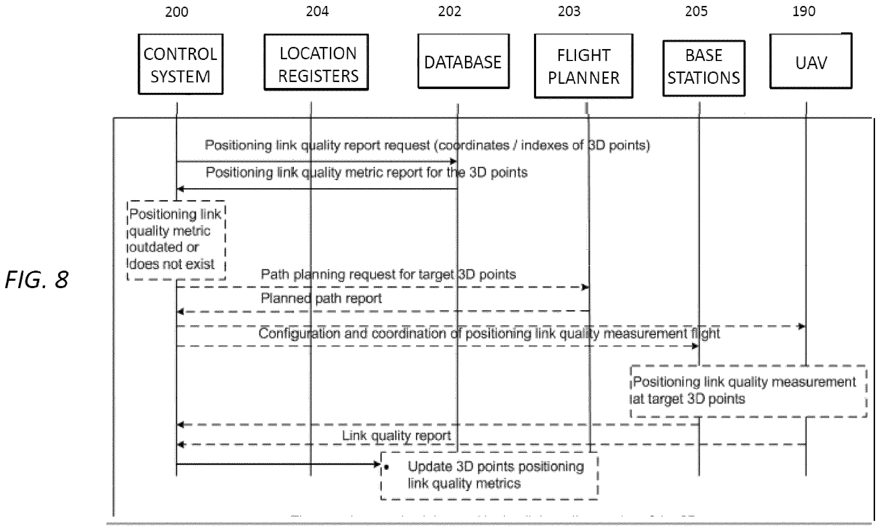

FIG. 7 is a flow chart describing signaling between, and processes at, different entities shown in FIG. 2, according to some example embodiments relating to reconnaissance or test flights. The control system 200 may configure one or more UAVs 190 in accordance with the procedure below. FIG. 8 is an associated flow chart describing signaling between, and processes at, different entities shown in FIG. 2, according to some example embodiments relating to maintaining positioning link quality metrics of the 3D model stored in the database 202.

In FIG. 7, data acquired by different sensors integrated on raised or flying structures, such as on one or more base stations 205, cranes 120 and/or UAVs 190 may be used to detect, identify and characterize or label different physical objects within the environment for updating the 3D model in the database 202.

For example, sensor data may be acquired in a general operation 702, comprising a combination of one or more of the following:
video data from on-board cameras of one or more base stations 205, cranes 120 and/or UAVs 190;
laser and/or LIDAR measurement data from one or more base stations 205, cranes 120 and/or UAVs 190;
identities of detected objects (e.g. based on RFID readings by UAVs 190 or other moving measurement vehicles), with relative position information with respect to the detected objects.

In a process 704, the control system 200 may determine appropriate labels. This may employ logic (e.g. an algorithm) at the control system 200 which recognizes one or more of object types (e.g. a shipping container, harbor vehicle, harbor worker, crane) and estimates the size and relative position in the coordinate system of the measuring camera. Laser-based distance measurements may be used to estimate distance measurements from UAVs 190 flying over containers 140, for example, for determining the number of containers stacked on top of each other, based on information on UAV altitude, and container height information. The control system 200 may also perform object recognition based on visual markers including, e.g., QR tags and/or RFID tags. A detailed object information query may be sent to a database based on the detected object identifier. Position estimate data may be obtained from the location registers 204. In a general operation 706, label data may be updated in the 3D model in the database 202 for such 'points of interest'.

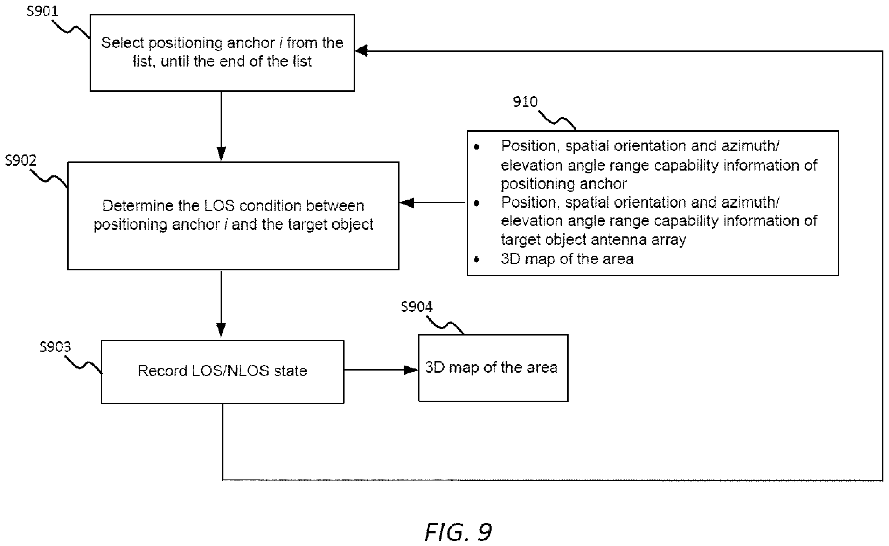

FIG. 9 is a flow chart describing operations relating to determining whether or not there is a LOS link between a target object and specific positioning anchor. The control system 200 may configure one or more UAVs 190 in accordance with the procedure below.

An algorithm run by the control system 200 may use information on positions, spatial orientations and azimuth/elevation angle ranges of positioning anchors and one or more target objects, as well as the 3D model in the database 202. As mentioned, the 3D model may comprise information e.g. on placement and classification of physical objects detected in the environment 100. Note that the process shown in FIG. 7 can be used to define the LOS/NLOS state of any 3D point of interest by forming a virtual vector between the coordinates of a 3D point of interest (in practice those corresponding to areas where the target object can move) and the coordinates of the positioning anchor. The algorithm performed by the control system 200 may then determine whether the state corresponds to "LOS" if, according to the 3D model data, there is or are no blocking obstacles between the start and the end points of the vector. Otherwise the state of the 3D point of interest is labeled as "NLOS."

A first operation S901 may comprise selecting a positioning anchor i from a list, until the end of the list.

A second operation S902 may comprise determining a LOS condition or state between the positioning anchor i and the target object. This may take information from a dataset 910, which may comprise (as indicated by the data set 910):
- position, spatial orientation, azimuth/elevation angle, range capability of positioning anchor;
- position, spatial orientation, azimuth/elevation angle, range capability of target object antenna array;
- 3D model of environment 100.

A third operation S903 may comprise recording the LOS/NLOS state and storing or updating the 3D model in the database 202. The third operation S903 may, for example, output a 3D map of the area.

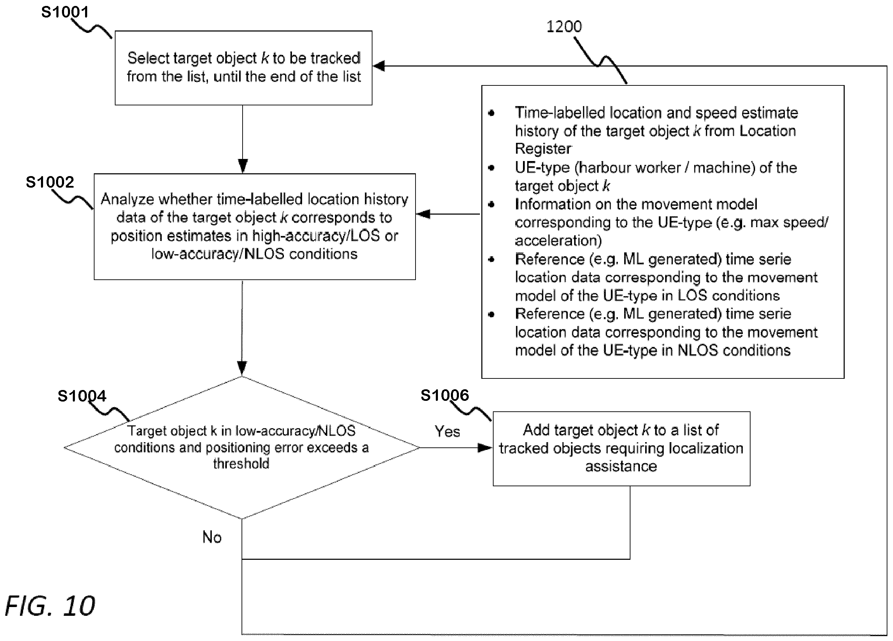

FIG. 10 is a flow chart describing operations relating to determining whether or not localization assistance is needed utilizing machine learning (ML) -based classification of a collected set of time-series data representing position estimates of a given target object k.

The idea is that a neural network is pre-trained with time-series position estimates, representing different conditions, such as:
location estimates from target objects in non-obstructed, LOS conditions;
location estimates from target objects in obstructed, NLOS conditions,
the estimates covering different types of target objects with different speeds (within their representative speed ranges.)

Such training data can be collected from field tests in the targeted environment 100.

During real-time operation, the time-labelled historical location and speed estimates of a target object *k,* is fetched from the database 202. The pre-trained ML algorithm is then applied to classify whether the fetched time-series data more likely represents reliable, high-accuracy position estimates, or unreliable, low-accuracy position estimates.

For decision making, the ML algorithm may utilize, as side information, the knowledge of the type of the target object and the corresponding motion model.

A target object *k* is added to a list of objects requiring localization assistance if the ML based classification algorithm, run by the control system 200, indicates the unreliable low-accuracy positioning state.

A first operation S1001 may comprise selecting a target object *k* from a list, until the end of the list.

A second operation S1002 may comprise analyzing whether time-labelled location history data for the target object *k* corresponds to position estimates in high accuracy / LOS or low accuracy / NLOS conditions.

A third operation S1004 may comprise determining if a low accuracy / NLOS condition is detected and the positioning error exceeds a threshold. If so, the target object *k* is added to a list of objects requiring localization assistance in an operation S1006. If not, the process returns to operation S1001.

Information used in the second operation S1002 may comprise a data set 1200 comprising:
time-labelled location and speed estimate history data for object *k*;
type of target object;
a movement model corresponding to the type of target object;
reference time-series location data (ML based) corresponding to the movement model in LOS conditions;
reference time-series location data (ML) corresponding to movement model in NLOS conditions.

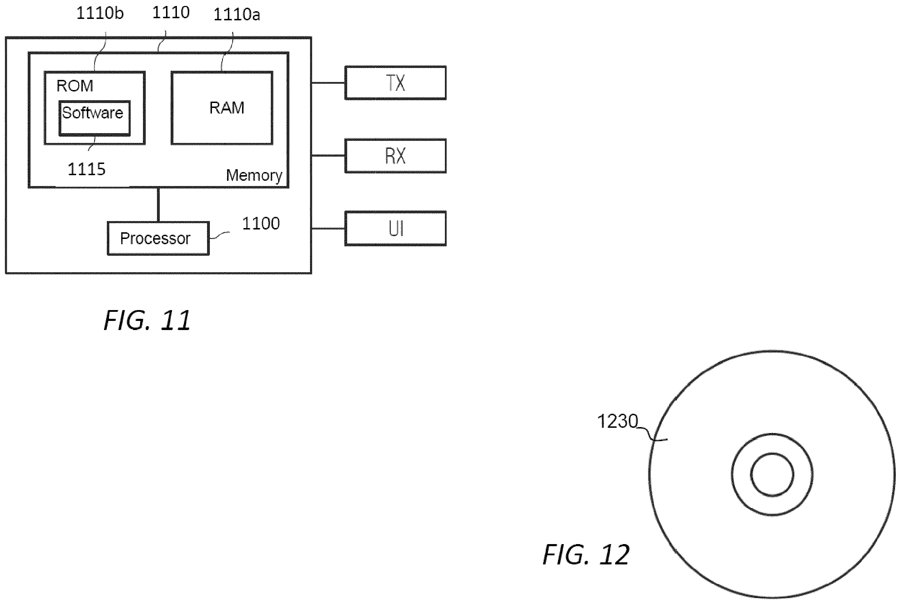

FIG. 11 shows an apparatus according to an embodiment. The apparatus may be configured to perform the operations described herein, for example operations described with reference to any preceding process. The apparatus comprises at least one processor 1100 and at least one memory 1110 directly or closely connected to the processor. The memory 1110 includes at least one random access memory (RAM) 1110a and at least one read-only memory (ROM) 1110b. Computer program code (software) 1115 is stored in the ROM 1110b. The apparatus may be connected to a TX path and a RXpath of a base station or a UAV in order to obtain respective signals. However, in some embodiments, the TX signals and RX signals are input as data streams into the apparatus. The apparatus may be connected with a user interface (UI) for instructing the apparatus and/or for outputting results. However, instead of by a UI, the instructions may be input e.g. from a batch file, and the output may be stored in a non-volatile memory. The at least one processor 1100, with the at least one memory 1110 and the computer program code 1115 are arranged to cause the apparatus to at least perform at least the method according to any preceding process.

Fig. 12 shows a non-transitory media 1230 according to some embodiments. The non-transitory media 1230 is a computer readable storage medium. It may be e.g. a CD, a DVD, a USB stick, a blue ray disk, etc. The non-transitory media 1230 stores computer program code causing an apparatus to perform the method of any preceding process.

Names of network elements, protocols, and methods are based on current standards. In other versions or other technologies, the names of these network elements and/or protocols and/or methods may be different, as long as they provide a corresponding functionality. For example, embodiments may be deployed in 2G/ 3G/ 4G/ 5G networks and further generations of 3GPP but also in non-3GPP radio networks such as WiFi. Accordingly, a base station may be a BTS, a NodeB, a eNodeB, a WiFi access point etc.

A memory may be volatile or non-volatile. It may be e.g. a RAM, a SRAM, a flash memory, a FPGA block ram, a DCD, a CD, a USB stick, and a blue ray disk. If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Some embodiments may be implemented in the cloud.

It is to be understood that what is described above is what is presently considered the preferred embodiments. However, it should be noted that the description of the preferred embodiments is given by way of example only and that various modifications may be made without departing from the scope as defined by the appended claims.

## Claims

1. Apparatus, comprising means for:
determining that a first mobile object requires positioning assistance based on one or more pre-determined criteria, wherein the pre-determined criteria comprises whether one or more properties of a planned or predicted future position of the first mobile object have been identified as insufficient, or are predicted as being insufficient, for determining the position of the first mobile object with a required level of accuracy;
responsive to said determination, causing deployment of one or more movable devices to a target position for providing the required positioning assistance to said first mobile object.

2. The apparatus of claim 1, wherein one or more of the one or more movable devices is/ are unmanned aerial vehicles.

3. The apparatus of claim 1 or claim 2, further comprising determining a required level of accuracy of the first mobile object based on its type or its current application.

4. The apparatus of any one of claims 1 to 3, wherein the planned or predicted future position of the first mobile object is determined based on the current position of the first mobile object and one or more prior locations of the first mobile object.

5. The apparatus of claim 4, wherein the planned or predicted future position of the first mobile object is determined using a machine learning model that is trained to predict future positions based on a predetermined set of prior locations.

6. The apparatus of any preceding claim, wherein the planned or predicted future position of the first mobile object is determined based on a predetermined route or waypoint plan for the mobile object.

7. The apparatus of any preceding claim, wherein the planned or predicted future position is identified as insufficient, or is predicted as being insufficient, using pre-provided data derived from a test journey made in advance by a movable device to substantially the same position.

8. The apparatus of any preceding claims, wherein the one or more criteria further determines whether one or more properties of the planned or predicted future position are insufficient, based on estimating, over time, a level of uncertainty in that future position and identifying said planned or predicted future position as being insufficient if the uncertainty level approaches or exceeds a predetermined uncertainty threshold.

9. The apparatus of any of preceding claim, wherein the one or more criteria further comprises determining whether a planned or predicted future position of the first mobile object has a line-of-sight (LOS) to one or more remote base stations and/or satellites from which its position can be derived.

10. The apparatus of claim 9, wherein the planned or predicted future position is determined as having a LOS or NLOS state using pre-provided data derived from a test journey made in advance by a movable device to substantially the same position.

11. The apparatus of any preceding claim, wherein the one or more criteria further comprises determining whether location history data of the first mobile object correspond to position estimates in high accuracy or low accuracy conditions.

12. The apparatus of any preceding claim, further comprising means for accessing data representing a model of an environment in which the first mobile object is to operate, the model storing data representing a 3D terrain of the environment and, for each of a plurality of spatial points within the 3D terrain, one or more updatable values indicative of whether location assistance is required at that spatial point.

13. The apparatus of any preceding claim, wherein the determining means further determines that one or more second mobile objects require positioning assistance based on one or more predetermined criteria, and responsive to said determination, determining a priority order of the first and the one or more second mobile object(s) to get assistance by causing deployment of the one or more movable devices to respective target positions according to a schedule.

14. A method, comprising:
determining that a first mobile object requires positioning assistance based on one or more predetermined criteria, wherein the predetermined criteria comprises whether one or more properties of a planned or predicted future position of the first mobile object have been identified as insufficient, or are predicted as being insufficient, for determining the position of the first mobile object with a required level of accuracy;
responsive to said determination, causing deployment of one or more movable devices to a target position for providing the required positioning assistance to said first mobile object.

15. A computer program product comprising a set of instructions which, when executed on an apparatus, is configured to cause the apparatus to
determinine that a first mobile object requires positioning assistance based on one or more predetermined criteria, wherein the predetermined criteria comprises whether one or more properties of a planned or predicted future position of the first mobile object have been identified as insufficient, or are predicted as being insufficient, for determining the position of the first mobile object with a required level of accuracy;
responsive to said determination, cause deployment of one or more movable devices to a target position for providing the required positioning assistance to said first mobile object.
